# DEMANDE DE BREVET EUROPEEN

(11) **EP 1 862 654 A1**
(43) Date de publication de la demande: **05.12.2007**
(21) Numéro de dépôt: 07301074.6
(22) Date de dépôt: 30.05.2007
(51) Int. Cl.: F02B 37/013, F02B 37/16, F02B 37/18

(54) **Procédé de régulation de pression dans un collecteur d'admission d'un moteur**

(30) Priorité: 01.06.2006 FR 0604903
(71) Demandeur: RENAULT S.A.S., 92100 Boulogne Billancourt (FR)
(72) Inventeur: Fontvieille, Laurent, 91190, Gif sur Yvette (FR)

(57) **Abrégé**

Procédé de régulation de pression (P2mes) dans un collecteur d'admission (2) d'un moteur à combustion interne (3) doté d'un turbocompresseur haute pression (4) et d'un turbocompresseur basse pression (5), le procédé comprenant la mesure de la pression régnant dans le collecteur d'admission (P2mes) et la commande (13) des moyens mécaniques de réglage (14) de la pression des gaz d'échappement de manière à réguler la pression régnant dans le collecteur (2) autour d'une première valeur de consigne de pression d'admission (Cons P2).

Le procédé étant caractérisé en ce :
- qu'on évalue en outre une pression (P3mes) régnant en amont de l'une au moins des dites turbines (6, 7) ;
- et on commande lesdits moyens mécaniques de réglage (14) de la pression des gaz d'échappement de manière à réguler ladite pression de gaz d'échappement (P3mes) en amont de l'une au moins des dites turbines (6, 7) en dessous d'une deuxième valeur de consigne de pression maximale autorisée en amont de l'une au moins des dites turbines (Cons P3).

## Description

La présente invention concerne, de façon générale, le domaine de la régulation de moteurs comportant deux turbocompresseurs préférentiellement étagés, c'est-à-dire ayant des turbines montées en série dans le sens d'écoulement des gaz d'échappement.

Plus particulièrement, l'invention concerne un procédé de régulation de pression dans un collecteur d'admission d'un moteur à combustion interne doté d'un turbocompresseur haute pression et d'un turbocompresseur basse pression, chacun desdits turbocompresseurs possédant une turbine propre et un compresseur propre entrainé à rotation par ladite turbine, chacune des turbines étant disposée sur un ensemble d'échappement de gaz brûlés du moteur pour y collecter de l'énergie par l'intermédiaire desdits gaz circulant dans cet ensemble d'échappement et chacun desdits compresseurs étant disposé sur un ensemble d'admission d'air relié audit collecteur d'admission afin de l'alimenter en air comprimé, le procédé comprenant la mesure de la pression régnant dans le collecteur d'admission et la commande des moyens mécaniques de réglage de la pression des gaz d'échappement (13) de manière à réguler la pression régnant dans le collecteur autour d'une première valeur de consigne de pression d'admission.

Il est connu du document brevet DE 101 44 663 un moteur du type précédemment défini et comportant deux turbocompresseurs. Pour ajuster la pression régnant dans le collecteur d'admission autour d'une valeur de consigne on mesure cette pression du collecteur et on ajuste la quantité d'énergie collectée par les turbines en faisant varier des positions de vannes de contournement des turbines. Etant donné que ces vannes de contournement sont montées en parallèle des turbines plus ces vannes de contournement sont ouvertes et moins la turbine contournée reçoit de gaz d'échappement ce qui entraine une réduction de la puissance mécanique délivrée au compresseur associé à cette turbine.

Dans ce contexte, la présente invention a pour but de proposer un procédé de régulation de pression dans un collecteur d'admission permettant de rendre la régulation efficace en terme de rapidité d'adaptation aux conditions de fonctionnement du moteur.

A cette fin, le procédé de régulation de pression de l'invention, par ailleurs conforme à la définition générique qu'en donne le préambule défini précédemment, est essentiellement caractérisé en ce :
- qu'on évalue en outre une pression régnant en amont de l'une au moins des dites turbines ;
- et on commande lesdits moyens mécaniques de réglage de la pression des gaz d'échappement de manière à réguler ladite pression de gaz d'échappement en amont de l'une au moins des dites turbines en dessous d'une deuxième valeur de consigne de pression maximale autorisée en amont de l'une au moins des dites turbines.

Grâce à cette limitation de la pression de gaz d'échappement en amont de l'une au moins des dites turbines en dessous d'une deuxième valeur de consigne, on s'assure que la ou les turbines en amont desquelles la pression est limitée ne transmettront pas une trop forte quantité d'énergie au(x) compresseur(s) qui leur sont associés.

Ainsi grâce à l'invention, le risque que la pression dans le collecteur dépasse sa consigne suite à une surcompression d'air incontrôlée est limité.

En effet, en cas d'augmentation subite de la pression des gaz d'échappement en amont de la ou des turbines, on contrôle directement la puissance effectivement transmise par la ou les turbines sans avoir à attendre de détecter l'augmentation de la pression dans le collecteur d'admission.

Grâce à cette caractéristique de l'invention, la régulation de la pression dans le collecteur est améliorée en réduisant notamment le risque de dépassement accidentel lié à une surpression des gaz d'échappement. En outre l'invention permet de :
- réduire les dérives de la précision de régulation de la pression régnant dans le collecteur d'admission aussi appelée pression de suralimentation *P2ₘₑₛ,* ces dérives dispersions étant liées aux composants qui participent à la régulation de suralimentation (source de dépression, électrovanne, poumon pneumatique de commande du turbocompresseur, le turbocompresseur) ;
- limiter la pression régnant en amont de l'une au moins des dites turbines aussi appelée la pression avant turbine *P*3*ₘₑₛ*pour protéger le moteur et le turbocompresseur ;
- prendre en compte l'impact de l'éventuel filtre à particules sur la régulation de pression de suralimentation *P*2*ₘₑₛ*.

Les définitions suivantes sont à prendre en compte pour la compréhension de l'invention décrite :
- le turbocompresseur haute pression est un turbocompresseur dont la turbine est située en amont de la turbine du turbocompresseur basse pression, vis-à- vis du sens d'écoulement des gaz dans les turbines. Ainsi les termes haute et basse pressions attachés aux turbocompresseurs expriment l'idée selon laquelle le turbocompresseur haute pression reçoit une pression de gaz d'échappement supérieure à la pression des gaz d'échappement reçue par le turbocompresseur basse pression qui est situé en aval du turbocompresseur haute pression ;
- la turbine basse pression est la turbine appartenant au turbocompresseur dit basse pression et la turbine haute pression est la turbine appartenant au turbocompresseur dit haute pression ;
- le compresseur basse pression est le compresseur appartenant au turbocompresseur basse pression et le compresseur haute pression est le compresseur appartenant au compresseur haute pression ;
- la pression régnant en amont d'une turbine de turbocompresseur est la pression mesurée dans le flux de gaz d'échappement amont de cette turbine et transitant par l'ensemble d'échappement de gaz brûlés du moteur ;
- le terme pression de suralimentation désigne la pression dans le collecteur d'admission P3.

L'invention est particulièrement adaptée pour assurer la limitation de la pression avant turbine(s) sur un moteur à double étage de suralimentation (c'est-à-dire un moteur ayant deux turbines en série au niveau de l'ensemble d'échappement et deux compresseurs en série au niveau de l'ensemble d'admission d'air).

Il est aisé d'intégrer l'invention dans la stratégie de régulation de la pression collecteur d'un moteur à double étage de suralimentation car il suffit pour cela de colleter une information représentative de la pression régnant en amont de la/des turbine(s) (par exemple par mesure à l'aide d'un capteur) et de programmer une unité de commande électronique du moteur pour qu'elle mette en oeuvre le procédé de l'invention. L'invention permet également d'utiliser la pression avant turbine sur un défaut du capteur de pression collecteur.

On peut par exemple faire en sorte que les moyens mécaniques de réglage de la pression des gaz d'échappement comportent des ailettes de turbines à géométrie variable, ces ailettes étant mobiles entre une configuration de pénétration maximale dans un flux de gaz d'échappement interne à la turbine et une configuration de pénétration minimale dans le flux de gaz d'échappement interne à la turbine, ces pales ayant une surface totale en contact avec le flux de gaz d'échappement qui est supérieure en configuration de pénétration maximale par rapport à ce qu'elle est en configuration de pénétration minimale.

Ce mode de réalisation permet d'adapter l'invention sur des moteurs choisis pour posséder des turbines à géométrie variable.

On peut également faire en sorte que les moyens mécaniques de réglage de la pression des gaz d'échappement comportent au moins un circuit de contournement de turbine(s) monté en parallèle de l'une au moins des dites turbines, ce circuit de contournement comportant au moins une vanne de décharge adaptée pour délimiter une section de passage de gaz d'échappement par le circuit de contournement, cette vanne de décharge étant mobile entre une configuration de décharge dans laquelle la section de passage de gaz par le circuit de contournement est maximale et une configuration de transit des gaz d'échappement par la turbine dans laquelle la section de passage de gaz par le circuit de contournement est minimale.

Ce mode de réalisation permet d'adapter l'invention sur des moteurs choisis pour posséder au moins une vanne de décharge adaptée pour commander sélectivement le passage de gaz d'échappement dans la turbine ou dans un circuit de contournement de turbine.

On peut également faire en sorte que si la pression évaluée des gaz d'échappement en amont de l'une au moins des dites turbines est supérieure à ladite deuxième valeur de consigne alors on commande certains au moins desdits moyens mécaniques de réglage de la pression des gaz d'échappement de manière à réduire cette pression des gaz d'échappement en dessous de ladite deuxième valeur de consigne et on cesse de réguler la pression régnant dans le collecteur autour de la première valeur au moins tant que la pression estimée des gaz d'échappement en amont de l'une au moins des dites turbines reste supérieure à ladite deuxième valeur.

En réduisant la pression des gaz d'échappement en amont de turbine en dessous de ladite deuxième valeur de consigne et en cessant de réguler la pression régnant dans le collecteur autour de la première valeur on entraîne une chute rapide de la puissance mécanique collectée par la ou des turbines puis mécaniquement une chute de pression dans le collecteur d'admission. Ce mode de réalisation permet de réduire la pression dans le collecteur d'admission plus rapidement que si l'on souhaitait la réduire par la régulation de pression en fonction de la pression mesurée dans le collecteur.

On peut également faire en sorte que lesdits moyens mécaniques de réglage de la pression des gaz d'échappement comportent un premier moyen mécanique de réglage d'une différence de pression de gaz d'échappement entre l'amont et l'aval de la turbine du turbocompresseur haute pression et un second moyen mécanique de réglage d'une différence de pression de gaz d'échappement entre l'amont et l'aval de la turbine du turbocompresseur basse pression et que le moteur comporte en outre un régulateur dit haute pression adapté pour commander le premier moyen mécanique de réglage d'une différence de pression et un régulateur dit basse pression adapté pour commander le second moyen mécanique de réglage d'une différence de pression, le régulateur dit haute pression étant adapté pour transmettre, au premier moyen mécanique, un signal de commande régulé en fonction de la mesure de pression régnant dans le collecteur d'admission et le régulateur dit basse pression étant adapté pour transmettre, au second moyen mécanique, un signal de commande régulé en fonction de la mesure de pression régnant dans le collecteur d'admission, le procédé étant en outre caractérisé en ce qu'on fait en sorte que les signaux de commandes régulés respectivement transmis par les régulateurs dits haute et basse pression soient toujours transmis à des instants différents.

Le fait que les signaux de commandes régulés transmis par les régulateurs haute et basse pression soient toujours transmis à des instants différents permet de réduire les risques d'interaction entre les ordres donnés par les deux régulateurs ce qui réduit ainsi le risque de dispersion par rapport à la consigne.

On peut également faire en sorte que la transmission d'un signal de commande régulé par le régulateur dit haute pression ne soit autorisée qu'à la condition que le moteur se trouve dans un premier domaine de fonctionnement moteur prédéterminé et que la transmission d'un signal de commande régulé par le régulateur dit basse pression ne soit autorisée qu'à la condition que le moteur se trouve dans un second domaine de fonctionnement moteur prédéterminé, les premiers et seconds domaines de fonctionnement étant disjoints l'un de l'autre et chaque domaine étant déterminé par un ensemble de points de fonctionnement moteur et chaque point de fonctionnement étant défini par une valeur de régime moteur et une valeur de couple moteur.

Les premier et second domaines de fonctionnement étant disjoints l'un de l'autre il en résulte que les signaux de commande régulés par le régulateur haute pression et les signaux régulés par le régulateur basse pression sont toujours transmis à des instants différents et à des instants adaptés au fonctionnement du moteur.

Les domaines sont choisis pour optimiser la vitesse et la précision de la régulation de pression dans le collecteur d'admission.

On peut également faire en sorte que lorsqu'un desdits premier ou second moyens mécaniques de réglage de différences de pressions ne reçoit pas de signal de commande régulé en fonction de la mesure de pression régnant dans le collecteur d'admission on fait alors en sorte qu'il reçoive un signal de commande de pré positionnement propre au premier ou second moyen mécanique et déterminé en fonction de valeurs courantes de régime moteur et de couple moteur.

Ce mode de réalisation permet en cas de défaillance des régulateurs haute ou basse pression d'avoir un pré positionnement des premier et second moyens mécaniques ce qui autorise un fonctionnement dégradé du moteur avec une fonction active des turbocompresseurs.

Ce mode de réalisation permet également de pré positionner les premier et second moyens mécanique lorsque le moteur ne fonctionne pas dans l'un des premier ou second domaines de fonctionnement.

On peut également faire en sorte que ladite première valeur de consigne de pression d'admission soit déterminée en fonction de valeurs courantes de régime moteur et de couple moteur et selon une fonction prédéterminée et mémorisée.

Cette caractéristique permet d'avoir un pré positionnement favorisant les performances du moteur.

On peut également faire en sorte que ladite première valeur de consigne de pression d'admission soit déterminée en fonction de valeurs mesurées de pression atmosphérique et de valeurs de température d'air entrant dans le moteur. Cette caractéristique est utilisée pour corriger le pré positionnement en fonction de paramètres influençant le rendement du moteur.

On peut également faire en sorte que ladite deuxième valeur de consigne de pression maximale autorisée en amont de l'une au moins des dites turbines soit déterminée en fonction de valeurs courantes de régime moteur et de couple moteur.

D'autres caractéristiques et avantages de l'invention ressortiront clairement de la description qui en est faite ci-après, à titre indicatif et nullement limitatif, en référence aux dessins annexés, dans lesquels:
la figure 1 représente un moteur adapté pour la mise en oeuvre du procédé selon l'invention ;
la figure 2 représente les courbes mesurées dans le temps de la pression dans le collecteur d'admission P2mes, de la première valeur de consigne de pression d'admission Cons P2, de la pression régnant en amont de l'une des turbines P3mes et de la deuxième valeur de consigne de pression maximale autorisée en amont de la turbine Cons P3 ainsi que le niveau de signal de la fonction d'activation de la limitation de pression en amont de turbine (aussi appelée pression en amont de turbine P3) ;
la figure 3 représente un graphique exprimant en fonction du régime et du couple moteur les positions des différents domaines de fonctionnement du moteur ;
la figure 4 représente un schéma pour l'obtention d'un signal de commande 20b régulé en fonction de la mesure de pression régnant dans le collecteur d'admission, ce signal régulé 20b étant transmis au second moyen mécanique de réglage 17b aussi appelé vanne de décharge 17b du circuit de contournement de turbine basse pression;
la figure 5 représente un schéma pour l'obtention d'un signal de commande 20a régulé en fonction de la mesure de pression régnant dans le collecteur d'admission, ce signal régulé 20a étant transmis au premier moyen mécanique de réglage 17a aussi appelé vanne de décharge 17a du circuit de contournement de turbine haute pression ;
la figure 6 représente un schéma pour l'obtention de la deuxième valeur de consigne de pression maximale autorisée en amont de la turbine Cons P3 ;
la figure 7 représente un schéma permettant l'obtention de la première valeur de consigne de pression d'admission Cons P2 aussi appelée consigne de pression de suralimentation ;
la figure 8 représente un schéma logique pour l'obtention d'un signal de commande de contournement du compresseur haute pression 9 par l'air circulant dans l'ensemble d'admission d'air 12 ;
la figure 9 représente un schéma logique pour l'obtention d'une commande dite d'activation de la limitation de la pression avant turbine qui consiste à ordonner la régulation de pression de gaz d'échappement P3mes en amont de l'une au moins des dites turbines 6, 7 en dessous de la deuxième valeur de consigne de pression maximale autorisée en amont de l'une au moins des dites turbines ;
la figure 10 représente un schéma logique permettant un arbitrage du régulateur haute ou basse pression qui doit envoyer un éventuel signal de commande régulé 20a ou 20b ou un signal de pré positionnement Prepos a, Prepos b.

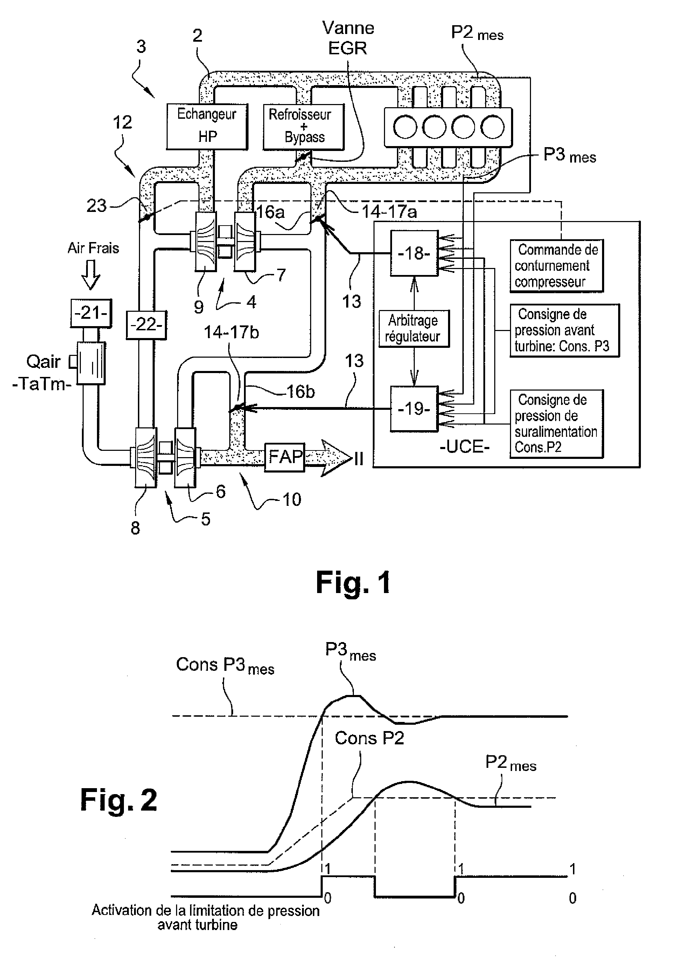

Le moteur 3 de la figure 1 comporte 4 chambres de combustions alimentées en air par l'intermédiaire d'un ensemble d'admission d'air comprenant un collecteur d'admission 2.

Le moteur comporte en outre un ensemble d'échappement 10 de gaz brûlés aussi appelés gaz d'échappement 11.

Le moteur comporte en outre un turbocompresseur haute pression 4 et un turbocompresseur basse pression 5, ce dernier étant disposé pour pourvoir être alimenté par des gaz d'échappement 11 provenant du turbocompresseur haute pression 4. La turbine haute pression 7 du turbocompresseur haute pression 4 est disposée au niveau de l'ensemble d'échappement 10 de gaz brûlés du moteur de manière à être en amont de la turbine basse pression 6 du turbocompresseur basse pression 5.

L'ensemble d'échappement comporte également un circuit de contournement 16a de la turbine haute pression 7 et un circuit de contournement 16b de la turbine basse pression 6, chacun de ces circuits de contournement est constitué par une conduite dont une extrémité débouche en amont de la turbine à contourner et dont l'autre extrémité débouche en aval de cette même turbine. Des vannes de décharge 17a et 17b sont respectivement disposées pour contrôler l'écoulement dans les conduites du circuit de contournement 16a de turbine haute pression 7 et du circuit de contournement 16b de turbine basse pression 6.

Un filtre à particules FAP est disposé sur une section aval de l'ensemble d'échappement de gaz brûlés 10 et donc en aval des turbines.

Chaque turbocompresseur dispose d'un compresseur entrainé à rotation par la turbine de ce même turbocompresseur.

Les compresseurs sont disposés sur l'ensemble d'admission d'air 12 de telle manière que l'air alimentant le moteur 3 puisse être successivement compressé par le compresseur basse pression 8 puis par le compresseur haute pression 9.

En entrée de l'ensemble d'admission d'air 12 est disposé un filtre à air 21 relié au compresseur basse pression 8 par une conduite dédiée.

L'ensemble d'admission d'air 12 comporte un circuit de contournement du compresseur haute pression pour permettre l'admission d'air dans les chambres de combustion du moteur sans que cet air transite et soit compressé par le compresseur haute pression 9. Une vanne de contournement 23 permet d'orienter l'air admis soit ver le compresseur haute pression soit vers le circuit de contournement. Ce circuit de contournement est constitué par une conduite dont les extrémités sont respectivement reliées en amont et en aval du compresseur haute pression 9.

Un échangeur thermique haute pression HP est disposé entre le circuit de contournement du compresseur et les chambres de combustion du moteur pour permettre la régulation de la température de l'air admis.
Un échangeur dit basse pression 22 est disposé entre les compresseurs haute et basse pression pour contrôler la température des gaz compressés par le compresseur basse pression 8.

Le moteur comporte un circuit de recirculation de gaz brûlés disposé entre l'ensemble d'échappement 10 et l'ensemble d'admission d'air 12. Une vanne de recirculation contrôle le transit de gaz brûlés vers le collecteur d'admission.
Différents capteurs sont répartis sur le moteur pour y collecter des informations de fonctionnement. On retrouve un capteur de pression pour mesurer la pression dans le collecteur d'air P2mes, un capteur de pression pour mesurer la pression en amont des turbines P3mes.

Le moteur comporte également une unité de commande électronique UCE qui est reliée aux différents capteurs pour en recevoir des informations mesurées et reliée aux actionneurs que sont notamment les vannes précitées pour les commander.

Cette unité de commande électronique UCE comporte plusieurs blocs fonctionnels que sont :
- un régulateur haute pression 18 pour la commande de la vanne de décharge haute pression 17a du circuit de contournement 16a haute pression,
- un régulateur basse pression 19 pour la commande de la vanne de décharge basse pression 17b du circuit de contournement 16b basse pression,
- une commande bistable de la vanne de contournement 23 du compresseur haute pression 9,
- un bloc de calcul de consigne de pression de suralimentation Cons P2 (aussi appelée première valeur de consigne de pression d'admission Cons P2),
- un bloc d'arbitrage des deux régulateurs HP et BP (Arbitrage régulateur) permettant de déterminer celui des deux régulateur 18 ou 19 qui est autorisé à transmettre un signal de commande régulé 20 en fonction de la pression P2mes ;
- un bloc de calcul de la deuxième valeur de consigne de pression maximale autorisée en amont de la turbine Cons P3.

Comme annoncé précédemment, l'invention concerne un procédé de régulation de la pression régnant dans le collecteur P2mes. Comme le montre la figure 2, dans ce procédé la limitation de pression avant turbine P3mes est mise en oeuvre uniquement lorsque la pression avant turbine P3 est supérieure à la consigne Cons P3 et tant que la pression P2mes dans le collecteur ne dépasse pas sa valeur de consigne Cons P2.

Cette régulation se fait par le régulateur qui est actif, c'est-à-dire soit par le régulateur dit haute pression 18 (aussi noté ***R**_{HP}*) soit par le régulateur dit basse pression 19 (aussi noté ***R**_{BP}*). Dans ce cas, la régulation de pression de suralimentation est désactivée et c'est la boucle en pression avant turbine qui va moduler l'ouverture de la vanne 17a ou 17b pour limiter la pression avant turbine. La régulation de pression avant turbine P3 est désactivée lorsque la pression de suralimentation P2mes est supérieure ou égale à sa consigne Cons P2.

Donc, lorsque la limitation est activée, nous pouvons dire que la pression avant turbine P3 est régulée sur sa consigne Cons P3.

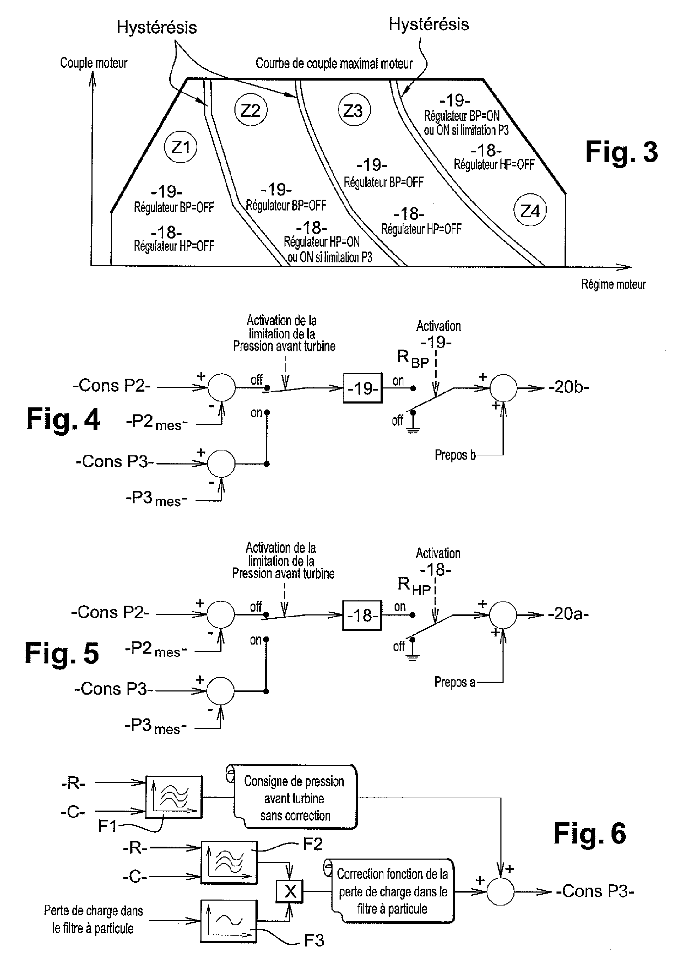

La régulation de pression dans le collecteur minimise en permanence l'écart entre la consigne Cons P2 et la mesure de la pression suralimentation P2mes. Dans le cas particulier d'une suralimentation étagée, la régulation de suralimentation est assurée par deux régulateurs. Il y a donc un régulateur par turbocompresseur. Les deux régulateurs 18 et 19 ne fonctionnent pas simultanément et leurs activations sont définies selon le point de fonctionnement moteur (régime R et couple C moteur). Il est possible de définir les 4 zones ou domaines de fonctionnement suivantes Z1, Z2, Z3 et Z4 tel que cela est représenté sur la figure 3.

Parmi les 4 domaines de fonctionnement Z1, Z2, Z3, Z4 de la régulation de pression, la limitation de pression avant turbine est assurée par le régulateur 19 (*R_{HP}*) dans le domaine Z2 et par le régulateur 18 (*R_{BP}*) dans le domaine Z4.

Ces deux domaines Z2, Z4 sont séparés entre eux par un domaine Z3 dans lequel les deux régulateurs 18 et 19 sont désactivés et ne transmettent pas de signal 20 limitant la pression avant turbine. Cette séparation évite le risque que les deux régulateurs transmettent en même temps un signal 20a ou 20b visant à limiter la pression avant turbine P3 ce qui risquerait de provoquer une instabilité du moteur.

Les frontières entre les domaines Z1, Z2, entre Z2 et Z3 et entre Z3 et Z4 sont formées par des fonctions hystérésis permettant de déterminer sans ambigüité le domaine de fonctionnement dans lequel se trouve le moteur sans risquer que le système ne change de zone de façon instable.

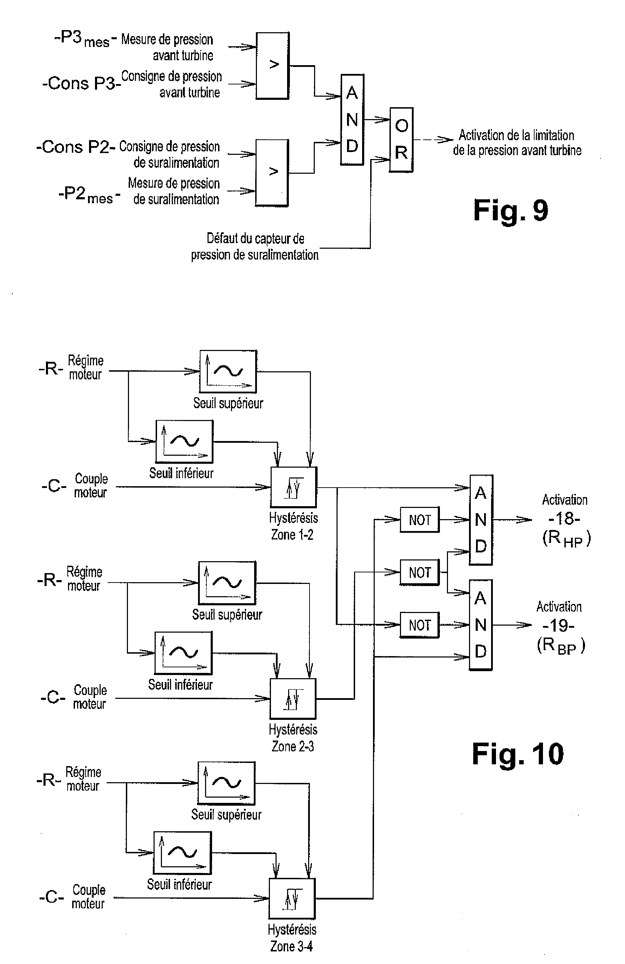

Le choix de l'activation de l'un ou de l'autre des régulateurs 18 ou 19 est réalisé par le bloc fonction arbitrage de l'UCE. Le détail de ce bloc est présenté sur la figure 10.

Pour déterminer le domaine de fonctionnement ou zone Z1, Z2, Z3 ou Z4 dans lequel se trouve le moteur à un instant donné, on entre des valeurs courantes de couple et de régime. Par un jeu de portes logique on détermine ainsi en fonction du couple C et du régime R courant celui des régulateurs 18 ou 19 qui doit être activé pour réguler la pression avant turbine.

Si le régulateur déterminé comme devant être activé est le régulateur basse pression 19, alors le schéma logique de la figure 4 est mis en oeuvre pour calculer le signal 20b de commande de la vanne basse pression 17b.

Dans le cas contraire, si le régulateur déterminé comme devant être activé est le régulateur haute pression 18, alors le schéma logique de la figure 5 est mis en oeuvre pour calculer le signal 20a de commande de la vanne haute pression 17a.

Chacun des schémas des figures 4 et 5 utilise en entrées :
- la première valeur de consigne Cons P2 (consigne de pression d'admission) ;
- la deuxième valeur de consigne Cons P3 (consigne de pression maximale autorisée en amont des turbines);
- une mesure de la pression d'admission P2mes ;
- une mesure de la pression régnant en amont des turbines P3mes ;
- une consigne de pré positionnement Preposb de vanne de décharge basse pression 17b pour le schéma de la figure 4 et une consigne de pré positionnement Preposa de vanne de décharge haute pression 17a pour le schéma de la figure 5 ;
- une commande bistable d'activation de la limitation de la pression avant turbine ;
- une commande d'activation de régulateur qui est une commande d'Activation *R_{BP}* du régulateur 19 pour le schéma de la figure 4 et une commande d'Activation *R_{HP}* du régulateur 18 pour le schéma de la figure 5.
   Chacun des schémas des figures respectives 4 et 5 produit en sortie un signal de commande régulé 20a pour la vanne 17a et 20b pour la vanne 17b.

Les procédés des figures 4 et 5 possèdent une première fonction de comparaison de consigne Cons P2 avec la mesure P2mes et une seconde fonction de comparaison de consigne Cons P3 avec la mesure P3mes.

Une bascule permet de sélectionner en fonction du signal d'Activation de la limitation de la pression avant turbine celle des première ou seconde fonctions de comparaison qui doit être choisie pour alimenter le régulateur actif 18 ou 19.

Le signal d'activation de la limitation de la pression avant turbine est déterminé à l'aide du schéma logique de la figure 9 qui sera expliqué par la suite.

Si le signal d'activation de la pression avant turbine est à 1, cela signifie que la pression avant turbine P3mes et supérieure à la consigne Cons P3 et qu'il est nécessaire de réduire cette pression avant turbine. Dans ce cas le régulateur 18 ou 19 prend uniquement en compte la seconde fonction de comparaison de consigne Cons P3 avec la mesure P3mes et ne prend pas en compte la première fonction de comparaison de consigne Cons P2 avec la mesure P2mes. Dans ce cas la régulation effectuée par le régulateur actif (haute ou basse pression 18 ou 19) est uniquement destinée à réguler la pression avant turbine sans prendre en compte la pression dans le collecteur d'admission.

Inversement si le signal d'activation de la pression avant turbine est à 0, cela signifie que la pression avant turbine P3mes et inférieure à la consigne Cons P3 et qu'il n'est pas nécessaire de réduire cette pression avant turbine. Dans ce cas le régulateur 18 ou 19 prend uniquement en compte la première fonction de comparaison de consigne Cons P2 avec la mesure P2mes et ne prend pas en compte seconde fonction de comparaison de consigne Cons P3 avec la mesure P3mes. Dans ce cas la régulation effectuée par le régulateur actif (haute ou basse pression 18 ou 19) est uniquement destinée à réguler la pression dans le collecteur d'admission sans prendre en compte la pression avant turbine.

En sortie du régulateur 19 de la figure 4 se trouve une bascule qui permet selon sa position de prendre en compte ou non le signal 20b calculé par le régulateur 19. La position de la bascule est déterminée par l'information d'activation donnée par le signal d'Activation *R_{BP}* précédemment calculé sur le schéma logique de la figure 10.

En sortie du régulateur 18 de la figure 5 se trouve une bascule pour prendre en compte ou non le signal 20a calculé par le régulateur 18 selon que celui-ci doit être activé ou non, cette information d'activation est donnée par le signal d'Activation ***R**_{HP}* précédemment calculé sur le schéma logique de la figure 10.

Si l'activation du régulateur est souhaitée alors le signal calculé par le régulateur actif est sommé par une fonction sommation avec un signal de pré positionnement qui est soit Preposb pour la figure 4 soit Preposa pour la figure 5. Le résultat de cette fonction de sommation constitue le signal qui est envoyé aux moyens mécaniques de réglage de pression de gaz d'échappement 14 que sont les vannes de décharge 17a et 17b.

Dans le cas où l'activation du régulateur n'est pas souhaitée alors le signal calculé par le régulateur 18 ou 19 n'est pas pris en compte et seule une valeur de pré positionnement de vanne Preposb pour la figure 4 ou Preposa pour la figure 5 est transmise à la vanne de décharge 17a ou 17b.

Les signaux transmis en sortie des schémas des figures 4 et 5 constituent la commande des moyens mécaniques de réglage de pression des gaz d'échappement 13.

La figure 9 présente les conditions nécessaires pour l'émission d'une commande d'Activation de la limitation de la pression avant turbine.

Lorsque le signal d'Activation de la limitation de pression avant turbine est à 1, cela indique qu'il est nécessaire de limiter P3 :
- si la pression avant turbine P3mes est supérieure à la consigne Cons P3 et que la pression dans le collecteur d'admission P2mes est inférieure à sa consigne Cons P2 ;
- ou si un défaut de capteur de pression de suralimentation est détecté.

Lorsque le capteur de pression de suralimentation est défectueux, plutôt que de couper la régulation et pénaliser le conducteur par un fort manque de puissance moteur, il est préférable d'avoir un mode dégradé régulant la pression de suralimentation par la pression avant turbine. Pour cela il suffit comme proposé sur la figure 9 de commuter en mode régulation de pression avant turbine lorsque l'on a un défaut de capteur de pression de suralimentation (capteur de pression d'admission).

La figure 6 présente un schéma logique de calcul de la consigne de pression avant turbine (ConsP3).
Pour obtenir cette consigne on utilise en entrée le régime R et le couple moteur C ainsi que des fonctions prédéterminées et mémorisées F1, F2 et F3. La fonction F1 est une fonction cartographiée en fonction de R et C qui permet d'obtenir une consigne de pression avant turbine sans correction.

Cette valeur est corrigée à l'aide d'une correction qui est fonction de la perte de charge générée par le filtre à particule. Cette correction est obtenue en utilisant un coefficient multiplicateur de la perte de charge F2 et la perte de charge mesurée F3. Ce coefficient multiplicateur est également donné par une fonction cartographiée en fonction du régime R et du couple moteur C.

La consigne Cons P3 est obtenue en sommant la consigne de pression avant turbine sans correction avec le produit du coefficient multiplicateur de la perte de charge F2 par la perte de charge mesurée F3.

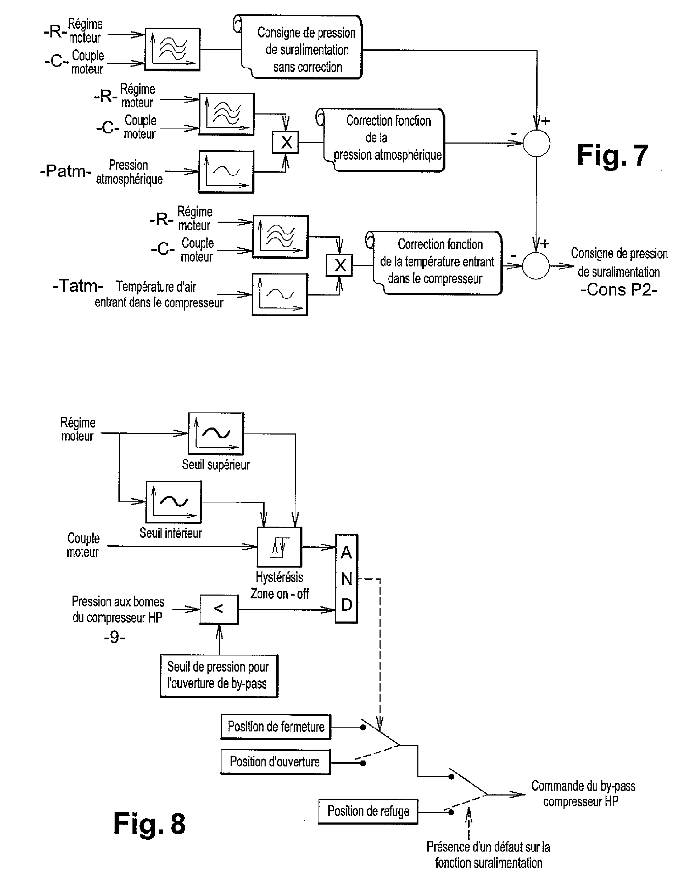

La consigne Cons P2 de pression d'admission est calculée selon le schéma logique de la figure 7 en prenant comme entrée le régime et le couple courant du moteur tel que mesuré(s) ou estimé(s) et la pression atmosphérique Patm ainsi que la température Tatm. Sur ce schéma on obtient dans un premier temps une valeur de consigne de pression de suralimentation sans correction à l'aide d'une fonction cartographiée dont les entrées sont le couple et le régime courant, puis dans un second temps on corrige cette consigne sans correction par des coefficients de corrections dépendants de la température de l'air et de la pression atmosphérique.

La figure 8 illustre un exemple de schéma logique permettant de commander le « by-pass », c'est-à-dire le contournement du compresseur haute pression 9 en fonction du régime moteur et du couple moteur ainsi que de la pression aux bornes du compresseur tout en prenant en compte un éventuel défaut de la fonction de suralimentation.

## Revendications

**1.** Procédé de régulation de pression (P2mes) dans un collecteur d'admission (2) d'un moteur à combustion interne (3) doté d'un turbocompresseur haute pression (4) et d'un turbocompresseur basse pression (5), chacun desdits turbocompresseurs (4, 5) possédant une turbine propre (6, 7) et un compresseur propre (8, 9) entrainé à rotation par ladite turbine (6, 7), chacune des turbines (6, 7) étant disposée sur un ensemble d'échappement de gaz brûlés du moteur (10) pour y collecter de l'énergie par l'intermédiaire desdits gaz circulant (11) dans cet ensemble d'échappement (10) et chacun desdits compresseurs (8, 9) étant disposé sur un ensemble d'admission d'air (12) relié audit collecteur d'admission (2) afin de l'alimenter en air comprimé, le procédé comprenant la mesure de la pression régnant dans le collecteur d'admission (P2mes) et la commande (13) des moyens mécaniques de réglage (14) de la pression des gaz d'échappement de manière à réguler la pression régnant dans le collecteur (2) autour d'une première valeur de consigne de pression d'admission (Cons P2), **caractérisé en ce :**
- **qu'**on évalue en outre une pression (P3mes) régnant en amont de l'une au moins des dites turbines (6, 7) ;
- et on commande lesdits moyens mécaniques de réglage (14) de la pression des gaz d'échappement de manière à réguler ladite pression de gaz d'échappement (P3mes) en amont de l'une au moins des dites turbines (6, 7) en dessous d'une deuxième valeur de consigne de pression maximale autorisée en amont de l'une au moins des dites turbines (Cons P3).

**2.** Procédé selon la revendication 1, **caractérisé en ce que** les moyens mécaniques de réglage de la pression des gaz d'échappement (14) comportent des ailettes de turbines à géométrie variable, ces ailettes étant mobiles entre une configuration de pénétration maximale dans un flux de gaz d'échappement interne à la turbine (6, 7) et une configuration de pénétration minimale dans le flux de gaz d'échappement interne à la turbine (6, 7), ces pales ayant une surface totale en contact avec le flux de gaz d'échappement qui est supérieure en configuration de pénétration maximale par rapport à ce qu'elle est en configuration de pénétration minimale.

**3.** Procédé selon l'une quelconque des revendications 1 et 2, **caractérisé en ce que** les moyens mécaniques de réglage (14) de la pression des gaz d'échappement (P3 mes) comportent au moins un circuit de contournement de turbine(s) (16a, 16b) monté en parallèle de l'une au moins des dites turbines (6, 7), ce circuit de contournement (16a, 16b) comportant au moins une vanne de décharge (17a, 17b) adaptée pour délimiter une section de passage de gaz d'échappement par le circuit de contournement (16a, 16b), cette vanne de décharge (17a, 17b) étant mobile entre une configuration de décharge dans laquelle la section de passage de gaz par le circuit de contournement (16a, 16b) est maximale et une configuration de transit des gaz d'échappement par la turbine dans laquelle la section de passage de gaz par le circuit de contournement (16a, 16b) est minimale.

**4.** Procédé selon l'une quelconque des revendications 1 à 3, **caractérisé en ce que** si la pression évaluée des gaz d'échappement en amont de l'une au moins des dites turbines (P3 mes) est supérieure à ladite deuxième valeur de consigne (Cons P3) alors on commande certains au moins desdits moyens mécaniques de réglage de la pression des gaz d'échappement (14) de manière à réduire cette pression des gaz d'échappement (P3 mes) en dessous de ladite deuxième valeur de consigne (Cons P3) et on cesse de réguler la pression régnant dans le collecteur (P2mes) autour de la première valeur (Cons P2) au moins tant que la pression estimée des gaz d'échappement en amont de l'une au moins des dites turbines (P3mes) reste supérieure à ladite deuxième valeur (Cons P3).

**5.** Procédé selon l'une quelconque des revendications 1 à 4, **caractérisé en ce que** lesdits moyens mécaniques de réglage (14) de la pression des gaz d'échappement (P3mes) comportent un premier moyen mécanique de réglage (17a) d'une différence de pression de gaz d'échappement entre l'amont et l'aval de la turbine du turbocompresseur haute pression et un second moyen mécanique de réglage (17b) d'une différence de pression de gaz d'échappement entre l'amont et l'aval de la turbine du turbocompresseur basse pression et **en ce que** le moteur (3) comporte en outre un régulateur dit haute pression (18) adapté pour commander le premier moyen mécanique de réglage (17a) d'une différence de pression et un régulateur dit basse pression (19) adapté pour commander le second moyen mécanique de réglage (17b) d'une différence de pression, le régulateur dit haute pression (18) étant adapté pour transmettre, au premier moyen mécanique (17a), un signal de commande régulé en fonction de la mesure de pression régnant dans le collecteur d'admission (20a) et le régulateur dit basse pression (19) étant adapté pour transmettre, au second moyen mécanique (17b), un signal de commande régulé en fonction de la mesure de pression régnant dans le collecteur d'admission (20b), le procédé étant **caractérisé en ce qu'**on fait en sorte que les signaux de commandes régulés (20a, 20b) respectivement transmis par les régulateurs dits haute et basse pression (18, 19) soient toujours transmis à des instants différents.

**6.** Procédé selon la revendication 5, **caractérisé en ce qu'**on fait en sorte que la transmission d'un signal de commande régulé (20a) par le régulateur dit haute pression (18) ne soit autorisée qu'à la condition que le moteur (3) se trouve dans un premier domaine de fonctionnement moteur prédéterminé (Z2) et que la transmission d'un signal de commande régulé (20b) par le régulateur dit basse pression (19) ne soit autorisée qu'à la condition que le moteur (3) se trouve dans un second domaine de fonctionnement moteur prédéterminé (Z4), les premiers et seconds domaines de fonctionnement (Z2, Z4) étant disjoints l'un de l'autre et chaque domaine (Z2, Z4) étant déterminé par un ensemble de points de fonctionnement moteur et chaque point de fonctionnement étant défini par une valeur de régime moteur (R) et une valeur de couple moteur (C).

**7.** Procédé selon l'une quelconque des revendications 5 et 6, **caractérisé en ce que** lorsqu'un desdits premier ou second moyens mécaniques de réglage de différences de pressions (17a, 17b) ne reçoit pas de signal de commande régulé en fonction de la mesure de pression régnant dans le collecteur d'admission (20a, 20b) on fait alors en sorte qu'il reçoive un signal de commande de pré positionnement (Prepos a, Prepos b) propre au premier ou second moyen mécanique (17a, 17b) et déterminé en fonction de valeurs courantes de régime moteur (C) et de couple moteur (C).

**8.** Procédé selon l'une quelconque des revendications 1 à 7, **caractérisé en ce que** ladite première valeur de consigne de pression d'admission (Cons P2) est déterminée en fonction de valeurs courantes de régime moteur (R) et de couple moteur (C) et selon une fonction prédéterminée et mémorisée (F1).

**9.** Procédé selon la revendication 8, **caractérisé en ce que** ladite première valeur de consigne de pression d'admission (Cons P2) est déterminée en fonction de valeurs mesurées de pression atmosphérique (Patm) et de valeurs de température d'air (Tatm) entrant dans le moteur.

**10.** Procédé selon l'une quelconque des revendications 1 à 9, **caractérisé en ce que** ladite deuxième valeur de consigne de pression maximale autorisée en amont de l'une au moins des dites turbines (Cons P3) est déterminée en fonction de valeurs courantes de régime moteur (R) et de couple moteur (C).
